# EUROPÄISCHE PATENTANMELDUNG

(11) **EP 0 522 188 A1**
(43) Veröffentlichungstag der Anmeldung: **13.01.1993**
(21) Anmeldenummer: 91111446.0
(22) Anmeldetag: 10.07.1991
(51) Int. Cl.: G05D 16/20

(54) **Steuerbarer Gasdruckregler**

(71) Anmelder: HONEYWELL B.V., NL-1101 EA Amsterdam (NL)
(72) Erfinder: Thiewes, R.J., NL-7873 CJ Odoorn (NL); Bel, H., NL-7901 EE Hoogeveen (NL)
(74) Vertreter: Rentzsch, Heinz, Dipl.-Ing.

(57) **Zusammenfassung**

Zur Einstellung des maximalen Ausgangsdrucks eines über einen Magnetantrieb steuerbaren Druckreglers ist der Träger (34) des Magnetantriebs (13 bis 16) in einem selbsthemmenden Innengewinde (35) des Druckreglergehäuses (26) verstellbar und fixierbar. Zur Einstellung des minimalen Ausgangsdrucks dient eine Einstellkappe (39), welche eine ortsfeste Abstützung für eine den Magnetanker (20) des Magnetantriebs tragende und mit ihrem freien Ende (31) auf die Membran (4) des Druckreglers (3 bis 5) einwirkende Stange (12) bildet. Die Einstellkappe (39) ist im Innengewinde (38) einer Hülse (33) verstellbar, welche fest in einem auf dem Träger (34) des Magnetantriebs gehaltenen Rohres (16) sitzt, durch welches die Stange (12) hindurchragt.

## Beschreibung

Die Erfindung betrifft einen steuerbaren Gasdruckregler gemäß Gattungsbegriff des Anspruchs 1. Ein solcher aus einem Membrandruckregler und einem aufgesetzten Elektromagnetantrieb bestehender steuerbarer Druckregler ist aus EP-B 0 039 000 bekannt. Aufgabe der Erfindung ist es, den Aufbau eines solchen Druckreglers, insbesondere hinsichtlich der Mittel zur Einstellung des maximalen und minimalen Ausgangsdrucks zu vereinfachen und auch die Einstellbarkeit des Druckreglers zu verbessern.

Diese Aufgabe wird gelöst durch die im Anspruch 1 gekennzeichnete Erfindung. Abweichend vom eingangs erwähnten Stand der Technik und anderen auf dem Markt befindlichen Druckreglern ähnlichen Aufbaus erfolgt die Einstellung des maximalen Ausgangsdrucks, nicht wie bisher üblich durch besondere auf den Anker und die Betätigungsstange einwirkende Einstellmittel, sondern durch Verstellen des gesamten Magnetantriebs gegenüber dem Gehäuse des Druckreglers. Dies führt zu einem äußerst einfachen Aufbau der Einstellmittel und erleichtert zudem den Einstellvorgang. Vorteilhafte Ausgestaltungen der Erfindung ergeben sich aus den Unteransprüchen.

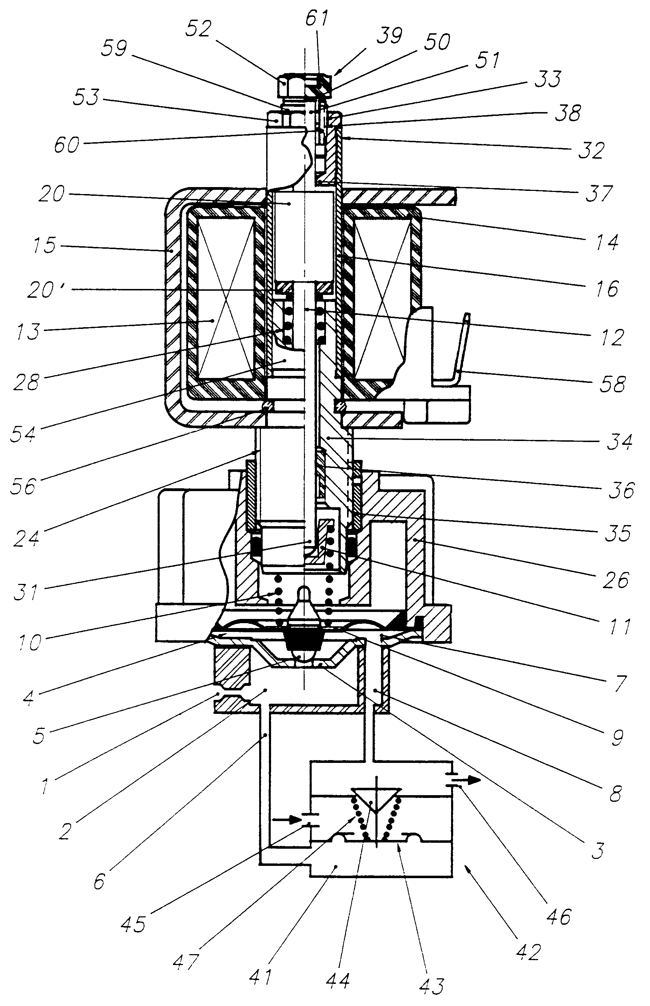

Die Erfindung wird nachfolgend anhand eines in der Zeichnung wiedergebenen Ausführungsbeispiels erläutert, wobei für jene Bauteile die mit denjenigen der eingangs genannten EP-B 0 039 000 übereinstimmen, gleiche Bezugszeichen verwendet sind.

Der Gasdruck vom Einlaß eines nicht dargestellten Gasregelgerätes wird über eine Drossel 1 dem Raum 2 unterhalb des Ventilsitzes 3 zugeführt, der mit einem von einer Membran 4 getragenen Schließkörper 5 zusammenarbeitet. Der Raum 2 ist über einen Steuerdruckkanal 6 an die Steuerkammer 41 eines nur schematisch dargestellten Hauptgasventils 42 angeschlossen. Seine Membran 43 steuert den Schließkörper 44 im Durchlaß zwischen Einlaß 45 und Auslaß 46. Die Kammer 7 zwischen Ventilsitz 3 und Membran 4 ist über einen Kanal 8 an die Auslaßseite 46 des Hauptgasventil 42 angeschlossen. Am Membranteller 9 der Membran 4 stützt sich eine Druckfeder 10 ab, welche auf der anderen Seite an einem tassenförmigen Gegenlager 11 anliegt. Dieses Gegenlager stützt sich zentral am unteren abgerundeten Ende 31 einer Stange 12 ab, die den zylindrischen Innenraum der Erregerspule 13 des Elektromagneten durchsetzt. Die Spule 13 ist auf einen Wickelkörper 14 aufgewickelt, der von einem magnetisch leitfähigen Gehäuse 15 umgeben ist. Durch den Spuleninnenraum ragt ein dünnwandiges Rohr 16, beispielsweise ein Messingrohr hindurch, in dessen oberes Ende 32 eine Hülse 33 fest eingesetzt, z.B. eingepreßt ist. Mit der Stange 12 fest verbunden sind der Anker 20 des Elektromagneten und ein nicht-magnetischer Abstandsring 20'. Das Rohr 16 wird vom Spulenträger 34 getragen, in den es z.B. eingepreßt ist und der zugleich den Wickelkörper 14 und das Magnetjoch 15 hält und mit einem Gewindeansatz 24 in ein selbsthemmendes Innengewinde 35 einer Gewindebuchse 35 im Oberteil 26 eines Druckreglergehäuses eingeschraubt ist. Der untere Teil der Stange 12 wird von einer in den Spulenträger 34 eingesetzten Führungsbuchse 36 aus Gleitwerkstoff, beispielsweise Kunststoff geführt. Zur Führung der Stange am oberen Ende dient ein Innenkragen 37 der Hülse 33. In das Innengewinde 38 dieser Hülse ist von oben eine hohle Einstellkappe 39 eingeschraubt, an deren innerer Deckfläche 50 das obere abgerundete Ende 51 der Stange 12 zentral anliegt. Sowohl die Einstellkappe 39 als auch die Hülse 33 ist mit Angriffsflächen 52 bzw. 53 für ein Einstellwerkzeug versehen. Im vorliegenden Fall sind es Sechskantflächen, es können auch Vierkant- oder andere Mehrkantflächen sein. Die Kappe 39 kann statt dessen einen Eingriffsschlitz für einen Schraubendreher oder Kreuzschlitzschraubendreher aufweisen. Zur drehfesten Verbindung des Rohres 16 mit dem Spulenträger 34 dient ein Preßsitz 54 für das untere Rohrende. Ein federnder Spreizring 56 zwischen dem Magnetjoch 15 und dem Spulenträger 34 fixiert Magnetjoch und Spule auf dem Spulenträger 34. Das Magnetjoch samt Erregerspule 14 ist vorzugsweise verdrehbar auf dem Spulenträger 34 gehalten.

Für die Einstellung des minimalen und des maximalen Ausgangsdrucks des Druckreglers wird wie folgt vorgegangen:
Zum Einstellen des maximalen Ausgangsdrucks wird die Spule 13 mit einem vorgegebenen Erregerstrom von beispielsweise 150mA erregt, wodurch der Anker 20 nach unten gezogen wird. Er liegt dann mit dem Ring 20'auf dem Spulenträger 34 auf. Dabei bewegt sich die Federtasse 11 nach unten und bestimmt in dieser Position die maximal Vorspannung der Feder 10. Nunmehr wird mit Hilfe eines am Sechskant 53 angreifenden Werkzeugs der gesamte Magnetantrieb bestehend aus Hülse 33, Rohr 16 und Spulenträger 34 mit aufgesetztem Magnetjoch 15 und Spule 14 gedreht und hierbei mit seinem Gewindeansatz 24 im selbsthemmenden Gewinde 35 des Reglergehäuses 26 verstellt. Damit ändert sich die Vorspannung der Feder 10 und somit die auf die Membran 4 bei erregter Spule 13 einwirkende Federkraft. Ist wie im gezeigten Ausführungsbeispiel das Magnetjoch 15 samt Spule 13 drehbar auf dem Spulenträger 34 gelagert, so kann bei dieser Einstellung das Magnetjoch samt Spule seine Winkellage beibehalten, so daß mit den elektrischen Anschlüssen 58 verbundene Anschlußleitungen nicht beansprucht werden. Sobald im Zuge dieser Einstellung der Maximaldruck am Ausgang erreicht ist, bleibt diese Position des Spulenträgers 34 im Gehäuse 26 durch das selbsthemmende Gewinde 35 fixiert. Diese Lagefixierung kann auch durch andere Mittel, beispielsweise durch eine Lacksicherung, eine Klemmschraube, eine Kontermutter oder anderweit erfolgen.

Für die Einstellung des minimalen Ausgangsdrucks wird die Spule 13 stromlos gemacht und der Druck durch Verstellen der Kappe 39 im Innengewinde 38 der Hülse 33 auf den gewünschten Wert gebracht. Um hierbei eine Mitnahme des Rohres 16 und des Spulenträger 34 zu vermeiden, hat der Gewindeteil 59 der Kappe 39 vorzugsweise den aus DE-GM 90 16 836 bekannten Aufbau. Durch achsparallele Schlitze 60 ist er in wenigstens zwei Teilstücke unterteilt und der Außendurchmesser des Gewindes ist am freien Ende des Gewindeteils geringfügig größer als an dem dem Deckelteil 52 benachbarten Gewindeteil. Der Gewindeteil 59 der Kappe 39 besteht vorzugsweise aus einem elastisch verformbaren Werkstoff, z.B. Kunststoff. Mit dieser Ausgestaltung ist zugleich eine Lagesicherung der Kappe 39 im Innengewinde 38 der Hülse 33 gewährleistet. Anstelle einer besonderen Einsatzhülse 33 könnten bei einer anderen Ausführungsform der Erfindung der Innenkragen 37, das Innengewinde 38 und die Werkzeugangriffsflächen 53 auch unmittelbar Teile des entsprechend geformten Rohres 16 sein.

Mit einem entsprechend dem Ausführungsbeispiel gestalteten Druckregler läßt sich beispielsweise einen Druckbereich von 4 bis 34 mbar einstellen, wobei man den Minimaldruck zwischen 4 und 10 mbar und den Maximaldruck zwischen 9 und 34 mbar verändern kann. Die Arbeitsweise des Druckreglers selbst ist die gleiche wie beim bekannten Druckregler gemäß EP-B 0 039 000.

Geht man zunächst von einem stromlosen Elektromagneten 13 aus, so stützt sich unter der Kraft der Feder 10 die Stange 12 mit ihrem membranfernen Ende 51 zentral an der Kappe 39 ab. Diese zentrale Abstützung ist gegen etwaige Fehler in der axialen Ausrichtung von Kappe 39, Hülse 33, Rohr 16 und Spulenträger 34 unempfindlich. Die Federtasse 11 bildet ein ortsfestes Widerlager für die Feder 10. Nimmt der über den Kanal 8 anstehende Auslaßdruck des Gasregelgeräts zu, so hebt dieser den Schließkörper 5 gegen die Kraft der Feder 10 weiter vom Sitz 3 ab, so daß ein Teil des über die Drossel 1 zugeführten Einlaßdrucks aus der Kammer 2 zum Auslaß 8 hin abgeblasen wird und der Druck in der Steuerleitung 6 sinkt. Damit wird das Hauptventil 42 durch seine Schließfeder 47 in Richtung auf einen geringeren Gasdurchsatz verstellt. Bei sinkendem Auslaßdruck hingegen nimmt der Steuerdruck in der Kammer 2 zu, und das Hauptgasventil 42 wird weiter geöffnet.

Fließt Strom durch die Erregerspule 13, so wird der Anker 20 samt Scheibe 20' mit der Stange 12 in Richtung auf die Membran 4 verschoben und damit der Feder 10 eine höhere Vorspannung gegeben. Dies bedeutet, daß das Abblasventil 5 erst bei einem höheren Ausgangsdruck im Kanal 8 öffnet, der Steuerdruck in der Kammer 2 also zunimmt und das Hauptventil 42 weiter geöffnet wird. Mit zunehmendem Stromfluß durch die Spule 13 nimmt also der Gasdurchsatz zu. Geht man davon aus, daß der Strom von der Temperatur in einem über das Gasregelgerät zu beheizenden Raum abhängt, so muß dieser Strom mit sinkender Temperatur zunehmen. Dies läßt sich durch eine Meßschaltung mit temperaturabhängigen Widerständen, beispielsweise NTC-Widerständen erreichen.

In Abhängigkeit von der gemessenen Temperatur und damit von dem die Spule 13 durchfließenden Strom wird somit der Arbeitspunkt des Druckreglers verstellt, weil auf diese Weise der durch die Federtasse 11 gegebene feste Abstützpunkt der Feder 10 eine der Temperatur entsprechende Lage einnimmt. Der Auslaßdruck des Gasregelgeräts wird somit vom Druckregler auf einen von der Temperatur abhängigen Wert geregelt. Dabei ergibt sich eine nahezu gleichprozentige Kennlinie. Auch bei geringen Durchsatzmengen behält somit der Regler seine Regelfähigkeit bei und arbeitet genau.

## Patentansprüche

1. Aus einem Membrandruckregler und einem aufgesetzten Elektromagnetantrieb bestehender steuerbarer Druckregler mit je einem Einstellmittel für den maximalen und den minimalen Ausgangsdruck, wobei
a) eine die Membran (4) des Druckreglers in Schließrichtung des Druckregelventils (3, 5) beaufschlagende Druckfeder (10) sich an einer verstellbaren Stange (12) abstützt;
b) die Stange (12) durch den hohlzylindrischen Innenraum der Erregerspule (13) des Eletromagneten hindurchragt und den beweglichen Anker (20) des Magnetantriebs (13 bis 16) trägt, und
c) die Stange (12) auf der der Membran (4) abgewandten Seite durch einen rohrförmigen Ansatz (16) des Spulenträgers (34) hindurchragt, **dadurch gekennzeichnet,** daß
d) der Rohransatz (16) ein Innengewinde (38) trägt;
e) eine mit einem Außengewinde (59) versehene Einstellkappe (39) im Innengewinde des Rohransatzes (16, 33) verstellbar ist und mit der Innenfläche (50) ihres Kopfteils (61) eine Anschlagfläche für das abgerundete Ende (51) der Stange (12) bildet;
f) an der Außenseite von Einstellkappe (39) und Rohransatz (16, 33) Angriffsflächen (52, 53) für ein Einstellwerkzeug vorgesehen sind;
g) der rohrförmige Spulenträger (34) auf seiner der Membran (4) zugewandten Seite mit einem Außengewinde (24) verstellbar in ein Innengewinde (35) des Druckreglergehäuses (26) eingeschraubt ist;
h) die eingestellte Position des Spulenträgers im Gehäuse sichernde Mittel (57) vorgesehen sind.

2. Druckregler nach Anspruch 1, **dadurch gekennzeichnet,** daß Magnetjoch (15) und Spule (13, 14) des Magnetantriebs drehbar auf dem Spulenträger (34) gehalten sind.

3. Druckregler nach Anspruch 1 oder 2, **dadurch gekennzeichnet,** daß die Werkzeugangriffsflächen (52, 53) durch Mehrkantvorzugsweise Sechskantflächen gebildet sind.

4. Druckregler nach einem der Ansprüche 1 bis 3, **dadurch gekennzeichnet,** daß als Positionssicherung Spulenträger (34) und Gehäuse (26) durch ein selbsthemmendes Gewinde (35) miteinander verschraubt sind.

5. Druckregler nach einem der Ansprüche 1 bis 3, **dadurch gekennzeichnet,** daß als Positionssicherung eine Kontermutter (57) auf dem Außengewinde (24) des Spulenträgers (34) verstellbar ist.

6. Druckregler nach einem der Ansprüche 1 bis 5, **dadurch gekennzeichnet,** daß der Rohransatz (16, 33) mit einem als Stangenführung dienenden Innenkragen (37) versehen ist.

7. Druckregler nach einem der Ansprüche 1 bis 6, **dadurch gekennzeichnet,** daß in das der Membran (4) zugewandte Ende des Spulenträgers (34) eine als Stangenführung dienende Buchse (36) aus Gleitwerkstoff, vorzugsweise Kunststoff eingesetzt ist.

8. Druckregler nach einem der Ansprüche 1 bis 7, **dadurch gekennzeichnet,** daß das Innengewinde (38) und/oder der Innenkragen (37) und/oder die Werkzeugangriffsflächen (53) des Rohransatzes (16, 33) Teile einer in den Rohransatz (16) fest eingesetzten Hülse (33) sind.

9. Druckregler nach einem der Ansprüche 1 bis 8, **dadurch gekennzeichnet,** daß der Gewindeteil (59) der Einstellkappe (39) durch achsparallele Schlitze (60) gabelförmig in wenigstens zwei Teilstücke unterteilt und der Außendurchmesser des Gewindes am freien Ende des Gewindeteils geringfügig größer ist als an dem dem Kopfteil (61) benachbarten Gewindeteil.

10. Druckregler nach einem der Ansprüche 1 bis 9, **dadurch gekennzeichnet,** daß beide Enden der Stange (12) abgerundet sind und das membrannahe Stangenende (31) sich am Boden eines tassenförmigen Federtellers (11) für die Druckfeder (10) abstützt.
